# EUROPEAN PATENT APPLICATION

(11) **EP 0 550 391 A1**
(43) Date of publication of application: **07.07.1993**
(21) Application number: 92830668.7
(22) Date of filing: 10.12.1992
(51) Int. Cl.: F16H 57/02, H01H 3/40, H01H 19/18, G05G 21/00

(54) **Worm gear limit switch device having small dimensions provided with an outlet shaft to be directly inserted in a cam sleeve which operates microswitches**

(30) Priority: 12.12.1991 IT MI911092 U
(71) Applicant: TECNO ELETTRICA RAVASI S.r.l., I-22056 Olgiate Molgora (Co) (IT)
(72) Inventor: Blasi, Osvaldo, Olgiate Molgora (Co) (IT)
(74) Representative: Klausner, Erich

(57) **Abstract**

The worm gear limit switch device has a very small overall dimensions due to a close-packed arrangement of the set (55) of step-down gears, which are assembled on two parallel pins (26, 30). The device utilizes as operation components a cam sleeve (70) combined with a group of microswitches (72) separated each other, of which the cam sleeve can be directly coupled on the upper portion (49) of a small shaft (48) which project over an intermediate plate (60) on which there is a socle (66) for fixing said microswitches.

## Description

This invention refers to a worm gear limit switch device having small dimensions and having an output shaft for direct insertion in a cam sleeve which activates microswitches.

An object of this invention is essentially that of creating a worm gear limit switch device with very small dimensions, for driving an operating component constituted by an adjustable cam sleeve which operates a microswitch separately mounted on said worm gear limit switch.

Another object of the invention is to create a worm gear limit switch device which offers the advantage of a quick and easy assembling, having a wide step-down ratio between the minimum and maximum value, of practical mounting and maintenancing and/or in adjusting the contemplated operating component.

According to the invention, the worm gear limit switch device includes a base casing on which a cover can be fastened to obtain a closed body, the inner space of the body being subdivided, by means of an intermediate plate, mountable into said base casing, in a lower chamber containing the step-down gears of the device and in an upper chamber apt to receive the operating component.

In the lower chamber is arranged in longitudinal direction the inlet shaft preferably provided with a worm screw which engages with the relative helicoidal wheel, the latter being associated, by means of a poligonal hub integral with it, to a pinion which actuates transmission gears, which are also coupled one another and rotatable on a second lateral pin, parallel to the first one.

The upper gear of said couple engages in turn with an end-wheel, freely pivoted on the first pin and which can be associated with a flanged composite coupling which, in its lower part, has a polygonal shape to mate with said end-wheel while, in its upper part, said coupling is cylindrical so as to engage in an output hole provided in said intermediate plate. In its central part said coupling is provided with a longitudinal polygonal through hole wherein a small metallic shaft can be inserted.

This small metallic shaft has in its central and upper portion a polygonal shape, while in its lower part it is cylindrical so as to form, contemporaneously, the pin of the helicoidal wheel and of the associated integral pinion.

In this way, the helicoidal wheel can independently freely rotate with the toothed end-wheel and the latter rotatably drives the flanged composite coupling as-well-as the small metallic shaft which, with its polygonal part projects over the intermediate plate in order to fit in the cam sleeve governing the microswitch, said microswitch being provided with a base having a given form, easily mountable and replaceable over said plate on a suitable socle provided on the plate with relative threaded pre-set fixing holes.

The described arrangement permits to obtain a very small and economic device, easily assemblable and very practical for mounting, adjusting and substituting of the operating components due to a very close arrangement of the step-down gears, whereby it is possible to achieve a wide range of reduction ratios using toothed wheels with a suitable number of teeth in various combinations.

The invention will now be described on the basis of an exemplifying arrangement of a device, with reference to the enclosed drawings in which:
Fig. 1 shows in a perspective exploded view an assembling example of the structure of the worm gear limit switch device, according to the invention;
Fig. 2 shows a partial longitudinal cross section of the arrangement of the toothed wheels which form the step-down set of the device;
Fig. 3 shows a lateral view of the external shape of the device shown in Fig. 1, seen from one of its sides; and
Fig. 4 shows a plan view of the device of Fig. 1, from the bottom.

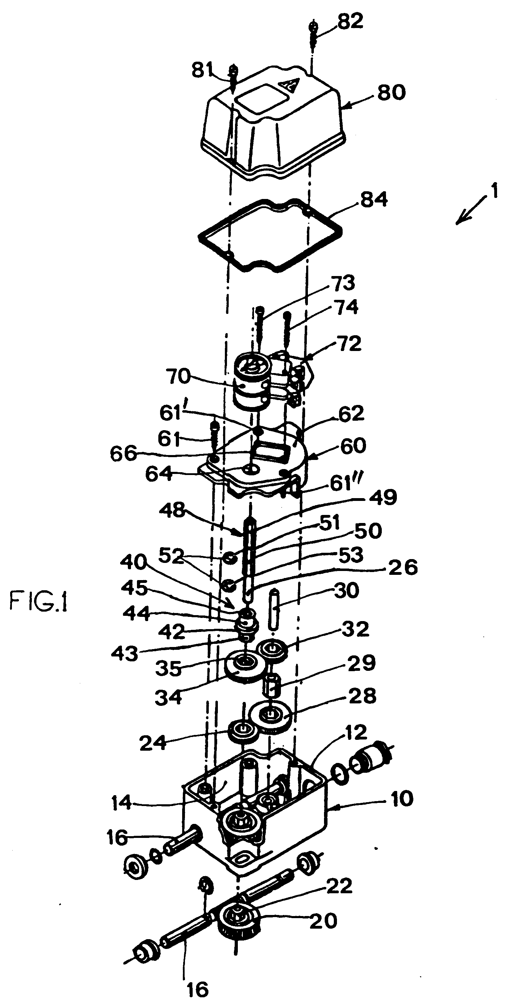

In fig. 1 the device according to the invention, generally marked by reference 1, includes a body formed by a lower shaped casing or base 10, substantially parallelepipedal, on top of which it is possible to place a cover 80 which can be fastened by means of screws 81 and 82 to the edge 12 of said base, a gasket 84 for the sealing of the casing being provided.

Inside base 10 it is possible to fasten, by means of screws 61, 61', 61'', an intermediate plate 60 which divides in two parts the inner volume of the body of the device; the lower part 14 forming practically the casing for the step-down gears, while in the upper part can be mounted the operating components such as the cam sleeve 70 and the relating group of microswitches 72.

The intermediate plate 70 has an upper flat surface 62 provided with a guide-hole 64 for bush provided with a projecting coupling for driving the cam sleeve 70 and a socle 66 on which a microswitch 72 can be mounted, by means of screws 73 and 74.

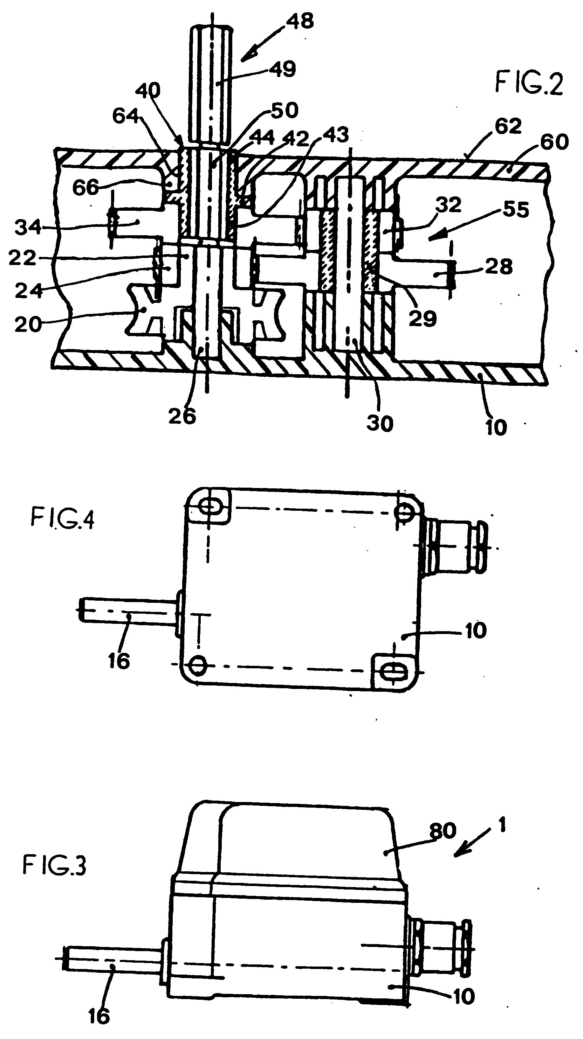

Fig. 1 together with fig. 2 show the arrangement of the toothed wheels which constitute the step-down set of the device, identified by numeral 55 (as a whole) in fig. 2.

The inlet worm screw shaft 16, which can be connected to a corresponding shaft of a machine or equipment (not shown) that has to be governed by the device, is placed longitudinally on the bottom of the base 10 and engages with an helicoidal wheel 20, thus creating a first pre-arranged reducing ratio which characterizes a stated range of the step-down set of gears.

The helicoidal wheel 20 is integral, in its central part, with a polygonal, drilled hub 22 onto which a pinion 24 is coaxially fitted onto the same pin 26 of the wheel 20, perpendicular to the axis of shaft 16.
The pinion 26 engages a first transmission toothed wheel 28 freely rotating on a second pin 30 parallel to pin 26, said toothed wheel 28 being coaxially joined by means of a polygonal hub 29, to a second transmission gear 32 which, in turn, engages an endwheel 34 freely rotatable on the first pin 26, which is common to the toothed wheels 20 and 24.

The endwheel 34 is provided in its center, such as the toothed wheels 24, 28, 32, with a polygonal hole 35 having a standard shape with relative joining bushes 22, 29; therefore said endwheel 34 can be coupled with a flanged hub 40 comprising, substantially at its central part, a flange 42 below it the external shape of the hub is polygonal and corresponding, for example, to the shape of the coupling bushes 22 and 29 to fit into the central hole 35 of the toothed endwheel 34 and, above said flange 42, a cylindrical part 44, having a diameter congruent with hole 64 of the intermediate plate 60, in which said cylindrical part can be fitted. Flange 42 meets on a corresponding projecting part 65, provided below the plate 60.

The flanged hub 40 is provided with a longitudinal polygonal through hole 45 in which can be inserted the central part of a little metallic shaft 48 which comprises, respectively, along its lenght, an upper part 49 for example exagonal, a central part exagonal too, preferably equal to the previous one and a lower cylindrical part 26, machined, for practical purposes, by turning the same exagonal bar forming said upper and central part 49 and 50.

The small shaft 48 constitutes contemporaneously in a practical and economical way the pin 26 for the toothed wheels 20 and 24 and the coupling member of the endwheel 34 by projecting, over the plate 60, an extension 49 on which the cam sleeve 70 can be fitted.

The little shaft 48 is longitudinally coupled to the hub 40 by means of a spring washer 52 fitted into a groove 51 provided between the parts 49 and 50 and into a groove 53 provided between parts 50 and 26.

By varying the engage of the toothed wheels 24, 28, 32 and 34 consistently with the center distance of pins 26 and 30 it is possible to obtain a wide range of stepdown ratio of the described and illustrated device maintaining a stated reduction ratio between the worm threaded shaft 16 and the helicoidal wheel 20.

When one needs a lower stepdown ratio, it is possible to replace the transmission group worm screw helicoidal wheel with two bevel gears.

The practicalness of the inner arrangement of the device according to the invention, must be underlined since it makes possible both to assemble quickly the set of stepdown gears in the manufacturing plant, and to replace easily any operating component, such as 70, which may be damaged by use or may need to be adjusted in a different way, by taking away only the cover 80 in order to reach the upper inner part, while the lower part 10, containing the reduction gears, is left isolated and protected from the entry of foreign matters.

## Claims

1. A worm gear limit switch device, characterized by a casing base (10) and of a cover (80) which can be fastened by means of screws (81, 82) to said casing base, within the perimeter of the latter being mountable an intermediate plate (60) which divides the inner space of the device into a lower housing (14), in which there is arranged the set (55) of the stepdown gears, and into an upper housing, formed between the upper flat surface (62) of said plate (60) and cover (80), in which is mounted an actuating component formed by a cam sleeve (70) and a group of microswitches (72), the cam sleeve (70) being connectable with the upper part (49), having a polygonal cross section, of a small metallic shaft (48) projecting from said intermediate plate (60), said small shaft being formed by a central polygonal shaped portion (50), which is inserted into a polygonal axial hole (45) of a flanged hub (40) which is in turn connected through a polygonal fitting (43) to the end wheel (34) of said set (55) of the stepdown gears, and by a lower cylindrical portion (26) acting as pivot pin for said end wheel (34), the intermediate plate (60) having a guide hole (64) for guiding the upper cylindrical portion (44) of said flanged hub (40) and a socle (66) for receiving a microswitch assembly (72).

2. A worm gear limit switch device, according to claim 1, characterized in that said set (55) of stepdown gears comprises a worm integral with the inlet shaft (16) meshing with an helicoidal wheel (20) turnable on a first pivot pin (26) integral with the small shaft (48) perpendicular with respect to said inlet shaft (16) and a set of four transmission gears (24, 28, 32, 34) of which the gears (24, 34) are coaxially mounted on said first pivot pin (26) on which is mounted the helicoidal wheel (20) while the others gears (28, 32) are rotatable on a second pivot pin (30), which is arranged in lateral and parallel ralationship with said first pivot pin, by means of which said four transmission gears several step down transmission ratios can be obtained at the end gear (34), said transmission ratios being variable between a minimum and a maximum value, the end gear (34) transmitting the rotation to said flanged hub (40).

3. A worm gear limit switch device according to claims 1 and 2, characterized in that said helicoidal wheel (20) is tortionally connected, through a polygonal hub (22) integral with said helicoidal wheel, to the first gear (24) of said gear set, said gear (24) meshing with the second gear (28) which is freely mounted on said second pivot pin (30), said second gear being coupled by means of a polygonal shaped hub (29) with the third gear (32) which meshes, in turn, with the end gear (34) which is freely rotatable on the first pivot pin (26) and fitted over said first gear (24).

4. A worm gear limit switch device according to claims 1 to 30, characterized in that the lower portion (26) of the small shaft (48) acting as a pivot pin for the pair of gears (20, 24) and having a circular section, is performed by turning the polygonal rod which constitutes the intermediate portion (50) and the upper portion (49) of said small shaft (48), while the second pivot pin (30) which is parallel to said small shaft (48), is formed by a simple pin sheared from a metallic round rod.

5. A worm gear limit switch device according to claims 1 to 4, characterized in that the upper surface (52) of the intermediate plate (50) is flat.

6. A worm gear limit switch device according to one or more claims 1 to 5, characterized in that the rotation transmission and step down set (55) comprises gears which are coupled among each other by means of polygonal elements having a central round through hole, which are discrete and/or integral with others elements, such as said flanged hub or one or more of the gears.

7. A worm gear limit switch device according to claim 1 characterized in that the first gear which transmits the rotary motion from the drive shaft is a bevel gear which meshes with a respective bevel gear mounted on said first pivot pin (26) to replace the worm helicoidal wheel step-down set.
